Europäisches Patentamt

European Patent Office

Office européen des brevets

(19)

(11) **EP 0 646 789 B1**

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(51) Int Cl.[7]: **G01N 27/406**, G01N 27/417

(21) Anmeldenummer: **94114016.2**

(22) Anmeldetag: **07.09.1994**

(54) **Verfahren zum Betrieb einer Abgassonde mit gepumpter interner Referenzatmosphäre**

Method of operating an exhaust gas sensor with pumped internal reference atmosphere

Procédé pour faire fonctionner un capteur de gaz d'échappement avec une atmosphère de référence interne pompée

(84) Benannte Vertragsstaaten:
**DE ES FR GB**

(30) Priorität: **30.09.1993 DE 4333231**

(43) Veröffentlichungstag der Anmeldung:
**05.04.1995 Patentblatt 1995/14**

(73) Patentinhaber: **ROBERT BOSCH GMBH**
**70442 Stuttgart (DE)**

(72) Erfinder:
• **Hötzel, Gerhard, Dr. Dipl.-Chem.**
**D-70376 Stuttgart (DE)**
• **Neumann, Harald, Dr. Dipl.-Ing.**
**D-71665 Vaihingen (DE)**
• **Strassner, Walter, Dipl.-Phys.**
**D-73614 Schorndorf (DE)**
• **Riegel, Johann, Dr. Dipl.-Ing.**
**D-74321 Bietigheim-Bissingen (DE)**

(56) Entgegenhaltungen:
**EP-A- 0 035 177**      **EP-A- 0 079 085**
**EP-A- 0 082 372**      **GB-A- 2 194 056**
**GB-A- 2 219 093**      **GB-A- 2 276 458**

**Beschreibung**

Stand der Technik

Die Erfindung betrifft ein Verfahren zur Beseitigung der Verfälschung der Referenzatmosphäre beim Betrieb einer Sauerstoffsonde mit gepumpter interner Referenzatmosphäre.

Eine Sauerstoffsonde dieser Art ist beispielsweise aus der DE 33 15 654 (US 4 496 455) oder der EP 0 035 177 bekannt. Die dort beschriebenen Sauerstoffsonden besitzen eine Meßzelle, gebildet aus einem Elektrolyten mit einer Meßelektrode und einer Referenzelektrode sowie eine Pumpzelle, gebildet aus einem weiteren Elektrodenpaar auf dem gleichen Elektrolyten. Die Meßelektrode ist dem Abgas einer Brennkraftmaschine ausgesetzt und die Referenzelektrode ist einer Referenzgasatmosphäre in einem kleinen Volumen innerhalb der Abgassonde ausgesetzt, das mit dem Abgas oder der Umgebung lediglich über feine Bohrungen korrespondiert, über die sich ggf. ein Überdruck innerhalb des kleinen Volumens abbauen kann.

Aufgrund dieser Bohrungen, aber auch wegen einer Restporosität des Elektrolyten, ist ein solches Referenzvolumen nicht gasdicht gegenüber der Umgebung bzw. dem Abgas. Zur Aufrechterhaltung einer stabilen Referenzatmosphäre wird daher an die Elektroden der Pumpzelle eine Spannung angelegt, die so bemessen und gerichtet ist, dass Sauerstoffionen aus dem Abgas in das Referenzgasvolumen gepumpt werden. Eine solche interne gepumpte Referenzatmosphäre besitzt gegenüber einer Umgebungsluftreferenz den Vorteil, dass eine unerwünschte Änderung ihrer Zusammensetzung, beispielsweise durch Spritzwasser oder durch Kraftstoff, vergleichsweise gering ist. Derartige Verfälschungen können jedoch noch insbesondere beim Stillstand der Brennkraftmaschine eintreten. Beispielsweise können Kraftstoffteilchen aus dem Abgas oder aus der Umgebung in die Referenzatmosphäre diffundieren und dort Sauerstoffteilchen binden. In diesem Fall sinkt der Partialdruck des Referenz-Sauerstoffs ab, was dazu führt, dass die Spannung der Messzelle abnimmt und je nach Stärke der Vergiftung der Referenzatmosphäre mit Kraftstoffteilchen sogar das Vorzeichen wechselt. Das in diesem Fall verfälschte Sondensignal vergrößert durch seinen Einfluss auf die Gemischbildung der Brennkraftmaschine die Emission unerwünschter Abgasbestandteile.

Die Aufgabe der Erfindung besteht in der Angabe eines Verfahrens zur schnellen Beseitigung eine Verfälschung der Referenzgasatmosphäre.

Die Aufgabe wird durch die im unabhängigen Anspruch angegebenen Merkmale gelöst.

Das erfindungsgemäße Verfahren weist den Vorteil auf, dass eine Verfälschung der Referenzgasatmosphäre in kürzestmöglicher Zeit beseitigt werden kann. Die Erhöhung des Pumpstromes auf an sich unzulässige Werte führt deshalb nicht zu einer Zerstörung des Elektrolyten, weil die Zeit des erhöhten Stromflusses begrenzt wird. Durch die Betrachtung des Zeitintegrals des Pumpstromes, welches mit einem vorgegebenen Schwellenwert verglichen wird, kann entweder ein höherer Strom für eine kürzere Zeit oder eine weniger große Erhöhung des Pumpstromes für eine längere Zeit vorgesehen werden.

Vorteilhafte Weiterbildungen und Ausgestaltungen des erfindungsgemäßen Verfahrens ergeben sich aus abhängigen Ansprüchen.

Die Erhöhung des Pumpstromes kann nach jedem Start der Brennkraftmaschine oder nach Ablauf vorgegebener Betriebsdauem der Brennkraftmaschine und/oder in bestimmten Betriebszuständen der Brennkraftmaschine ausgelöst werden, beispielsweise wenn ein Absinken der Ausgangsspannung (Us) der Abgassonde eine verfälschte Referenzatmosphäre anzeigt oder wenn die Ausgangsspannung der Abgassonde einen vorgegebenen Schwellenwert innerhalb einer vorgegebenen Zeitspanne nicht wenigstens einmal durchläuft.

Eine vorteilhafte Maßnahme sieht vor, dass das Zeitintegral des Pumpstromes auf die Größe des Referenzgasvolumens abgestimmt wird.

Weitere vorteilhafte Ausgestaltungen und Weiterbildungen des erfindungsgemäßen Verfahrens ergeben sich aus weiteren abhängigen Ansprüchen und aus der folgenden Beschreibung.

Figur 1 zeigt eine Abgassonde mit gepumpter Referenz und ein Ausführungsbeispiel einer Beschaltung, wie sie zur Durchführung des erfindungsgemäßen Verfahrens geeignet ist.

Figur 2 zeigt ein Ersatzschaltbild der Sonde und ein weiteres Ausführungsbeispiel einer zur Durchführung des erfindungsgemäßen Verfahrens geeigneten Schaltung zusammen mit einem Steuergerät.

Fig. 2a stellt ein Ausführungsbeispiel der Spannungsversorgung aus der Fig. 2 dar.

Figur 3 verdeutlicht die Änderung der Ausgangsspannung einer Sauerstoffkonzentrationszelle unter dem Einfluß einer verfälschten Referenzatmosphäre.

Figur 4 stellt die Wirkung des erfindungsgemäßen Verfahrens auf die Ausgangsspannung einer Abgassonde mit einer Beschaltung wie in den Figuren 1 oder 2 dar.

Figur 5 offenbart ein Flußdiagramm zur Durchführung eines Ausführungsbeispiels des erfindungsgemäßen Verfahrens.

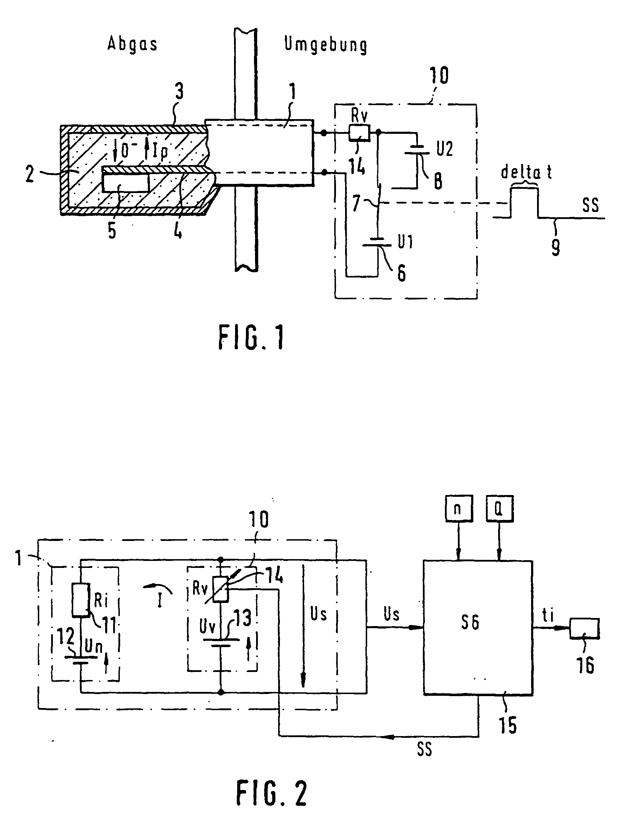

Die 1 in der Figur 1 bezeichnet eine Abgassonde mit einem sauerstoffionenleitenden Festelektrolyten 2, der über eine Meßelektrode 3 dem Abgas einer Brennkraftmaschine und über eine Referenzelektrode 4 einer Referenzatmosphäre in einem kleinen Volumen 5 innerhalb der Abgassonde ausgesetzt ist. Diese Vorrichtung arbeitet als Sauerstoffkonzentrationszelle nach dem Nernst-Prinzip und liefert das bekannte stufenförmige Ausgangssignal in Abhängigkeit vom Logarithmus des Quotienten der Sauerstoffkonzentrationen im Abgas und in dem kleinen Volumen.

Zur Aufrechterhaltung einer stabilen Referenzgasatmosphäre wird im Normalbetrieb der Abgassonde eine Spannung U1 mittels einer ersten Spannungsquelle 6 über einen Vorwiderstand Rv (14) an die Meßelektrode 3 und Referenzelektrode 4 gelegt, die so gerichtet ist, daß Sauerstoffionen aus dem Abgas in das kleine Volumen gepumpt werden. Zu diesem Zweck ist der positive Pol der Spannungsquelle 6 mit der Referenzelektrode und der negative Pol mit der Meßelektrode verbunden.

Diese im Dauerbetrieb anliegende Spannung kann beispielsweise geringfügig größer als die höchstmögliche Nernst-Spannung der Konzentrationszelle gewählt werden. Durch diese Festlegung wird einerseits eine Zersetzung des Elektrolyten weitgehend vermieden und andererseits gewährleistet, daß auch bei fettem Gemisch und damit sauerstoffarmen Abgas eine unzulässige Beeinträchtigung der sauerstoffreichen Referenzgasatmosphäre durch Diffusion von Sauerstoff aus der Referenzgasatmosphäre heraus unterbleibt.

Zur Beseitigung einer verfälschten Referenzgasatmosphäre kann der Sauerstoffionenstrom zum Referenzgasvolumen nach dieser Darstellung vorübergehend erhöht werden, indem der Schalter 7 mit einem Steuersignal SS (9) für eine begrenzte Zeit delta t so betätigt wird, daß an der Abgassonde eine Spannung U1 plus U2 anliegt, wobei U2 von einer zweiten Spannungsquelle 8 geliefert wird. Alternativ zu einer Reihenschaltung aus U1 und U2 kann auch auf eine einzelne Spannungsquelle U2 mit U2 größer U1 umgeschaltet werden. Der unterbrochen dargestellte Block 10 faßt die beiden Spannungsquellen 6 und 8 und den Schalter 7 sowie den Vorwiderstand 14 zu einer Vorrichtung zur Stromversorgung mit steuerbarem Ausgangsstrom Ip zusammen.

Um zu verhindern, daß der Sauerstoffionenstrom zum Referenzgasvolumen zu einem unerwünscht hohen Druck im Referenzgasvolumen führt, kann beispielsweise ein poröser Kanal vom Referenzgasvolumen zur Umgebung vorgesehen werden. Ein solcher Kanal, der einen vom Druckgefälle verursachten Teilchenstrom vom Referenzgasvolumen zur Umgebung erlaubt, kann auch durch eine porös ausgeführte Referenzelektrodenzuleitung zu den Außenkontakten der Abgassonde realisiert werden.

Das Ersatzschaltbild der Figur 2 stellt die Abgassonde 1 als Reihenschaltung aus einem Innenwiderstand Ri (11) und einer Quellspannung Un (12), entsprechend der Spannung, die sich zwischen Meß- und Referenzelektrode als Folge der unterschiedlichen Sauerstoffpartialdrücke im Abgas und im Referenzgasvolumen einstellt, dar. Der Abgassonde entgegengeschaltet ist die Spannungsversorgung (10), die sich aus einer Vorspannungsquelle (13) und einem steuerbaren Vorwiderstand Rv (14) zusammensetzt.

Das Steuersignal SS zur Einstellung des Vorwiderstandes Rv kommt von einem Steuergerät (15), beispielsweise einem bei Brennkraftmaschinen üblicherweise ohnehin vorhandenen Rechner, der unter anderem zur Ausgabe von Einspritzimpulsen ti an Kraftstoffeinspritzvorrichtungen (16) dient, wie sie in Abhängigkeit von Betriebsparametern der Brennkraftmaschine, bspw. der Drehzahl n, der Last Q und des Signals Us der Abgassonde gebildet werden.

Die Fig. 2a zeigt als weiteres Ausführungsbeispiel eine Spannungsversorgung 10, gebildet aus einer Konstantstromquelle 17, und einer weiteren Konstantstromquelle 18, welche über einen Schalter 19, gesteuert über ein Schaltsignal SS zugeschaltet werden kann. Die Konstantstromquelle 17 liefert den Pumpstrom I1 für den Normalbetrieb der Abgassonde und die Konstantstromquelle 18 liefert einen zusätzlichen Pumpstrom I2 zur Beseitigung einer verfälschten Referenzgasatmosphäre.

Die Bedingungen, unter denen das Steuergerät 15 ein Signal SS zur Erhöhung des Sauerstoffionenstroms zum Referenzgasvolumen herausgibt, können verschiedenartiger Natur sein. Es ist z.B. denkbar, das Referenzgasvolumen nach jedem Start der Brennkraftmaschine, oder nach Ablauf vorgegebener Betriebsdauern der Brennkraftmaschine und/oder in bestimmten Betriebszuständen der Brennkraftmaschine, beispielsweise im Schiebebetrieb, mit einem erhöhten Sauerstoffionenstrom zu spülen.

Im Rahmen des Ausführungsbeispiels nach der Figur 2 kann als Auslösekriterium für das Erhöhen der Pumpspannung bzw. des Pumpstroms auch das Verhalten der Spannung Us verwendet werden. Für Us gilt für das Ausführungsbeispiel nach Figur 2 folgender Zusammenhang.

$$Us = Uv - Ip * Rv = Ip * Ri + Un \qquad\qquad (I)$$

Mit

$$Ip = (Uv - Un)/(Rv + Ri) \qquad\qquad (II)$$

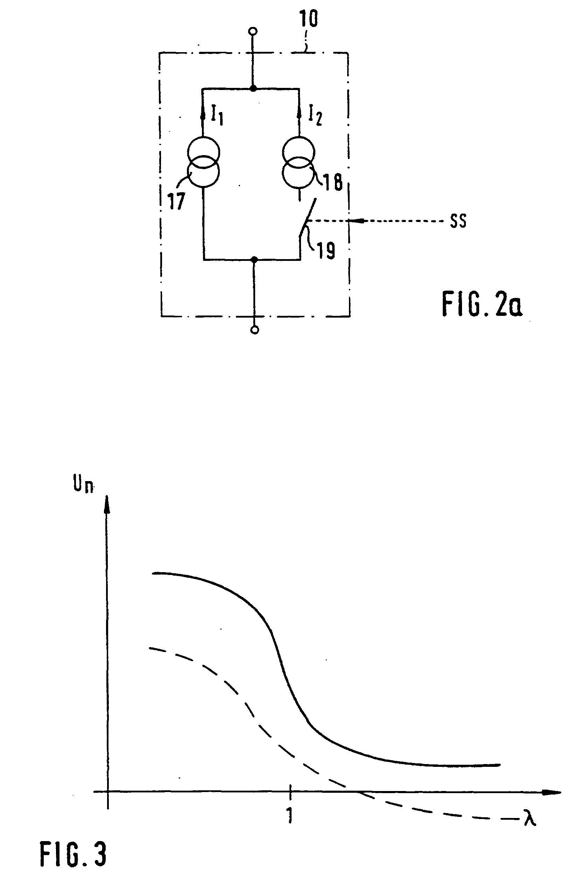

Dabei wird das Verhalten der Quellspannung Un der Abgassonde durch die Figur 3 verdeutlicht, die den Verlauf von Un über der Luftzahl Lambda des der Brennkraftmaschine zugeführten Gemisches zeigt. Die ausgezogene Linie gilt für eine reguläre Referenzgasatmosphäre mit einem Sauerstoffpartialdruck von typischerweise 0,2 bar. Gegenüber diesem Referenzdruck ist der Partialdruck des Gleichgewichtssauerstoffs im Abgas für jede Luftzahl Lambda um einige Zehnerpotenzen niedriger und bestimmt den Betrag und die Richtung der Nernstspannung Un der Konzentrationszelle. Im Abgas einer Brennkraftmaschine für den Antrieb von Kraftfahrzeugen ist diese Nernstspannung über den gesamten Lambdabereich positiv.

In einer durch eindiffundierte Kraftstoffteilchen verfälschten Referenzatmosphäre wird der Referenzsauerstoff-Partialdruck erniedrigt. Die resultierende Nernstspannung ist über den gesamten Meßbereich entsprechend erniedrigt und kann speziell im mageren Abgas negative Werte annehmen. Der unterbrochen dargestellte Spannungsverlauf in der Fig. 3 zeigt diesen Fall. Ganz allgemein kann für jede Konzentrationszelle das Auftreten einer negativen Quellspannung Un als Signal für das Auftreten einer verfälschten Referenzatmosphäre dienen und zur Auslösung einer vorübergehenden Pumpstromerhöhung verwendet werden um diese Verfälschung schnellstmöglich zu regenerieren.

Negative Sondensignale treten, wie in der Fig. 3 dargestellt, bevorzugt bei magerer Gemischzusammensetzung auf. Aus diesem Grunde bietet sich eine Überprüfung des Sondensignals im Schiebebetrieb bei abgeschalteter Kraftstoffzufuhr an. Dieser Betriebszustand hält häufig über einige Sekunden an und ermöglicht dadurch eine besonders sichere Erkennung einer verfälschten Referenzatmosphäre, da diese sich in diesem Fall durch ein ebenfalls über mehrere Sekunden anhaltendes negatives Sondensignal bemerkbar macht.

Wird dieser Fall durch eine Überprüfung des Sondensignals im Steuergerät 15 festgestellt, gibt dieses das Signal SS aus, das beispielsweise den Wert des Vorwiderstandes Rv auf ca. 1/5 seines sonst gültigen Wertes reduziert. Die nachstehende Tabelle zeigt die Erhöhung des Pumpstroms Ip bei einer Veränderung des Vorwiderstandes Rv von 51 kOhm auf 10 kOhm jeweils für fettes (Un = 0,9 Volt) und mageres (Un = 0,1 Volt) Gemisch bei einem Sondeninnenwiderstand von 100 Ohm. Die sich unter diesen Randbedingungen einstellenden Werte für den Pumpstrom Ip und die Sondenspannung Us wurden aus den Beziehungen (I) und (II) berechnet.

| Sauerstoff-Sonde mit gepumpter Referenz theoret. Werte für Sondenspannung und Pumpstrom | | | | | |
|---|---|---|---|---|---|
| Ri [Ohm] | Rv [kOhm] | Uv [V] | Un | Us [V] | Ip [uA] |
| 100 | 51.0 | 1.0 | 0.9 | 0.900 | 2.0 |
| 100 | 51.0 | 1.0 | 0.1 | 0.102 | 17.6 |
| 100 | 10.0 | 1.0 | 0.9 | 0.901 | 9.9 |
| 100 | 10.0 | 1.0 | 0.1 | 0.109 | 89.1 |

Bei den hier beispielhaft angenommenen Werten führt die Verringerung des Vorwiderstandes Rv auf ca. 1/5 seines Wertes für Dauerbetrieb zu einer Erhöhung des Pumpstroms Ip und damit des Sauerstoffionenstroms zum Referenzgasvolumen auf etwa das Fünffache. Entsprechend verkürzt sich die Zeit, die zur Beseitigung der Verfälschung der Referenzgasatmosphäre verstreicht, auf ca. 1/5.

| Sauerstoff-Sonde mit gepumpter Referenz theoret. Werte für Sondenspannung und Pumpstrom | | | | | |
|---|---|---|---|---|---|
| Ri [Ohm] | Rv [kOhm] | Uv [V] | Un | Us [V] | Ip [uA] |
| 100 | 51.0 | 1.0 | 0.9 | 0.900 | 2.0 |
| 100 | 51.0 | 1.0 | 0.1 | 0.102 | 17.6 |
| 100 | 51.0 | 3.0 | 0.9 | 0.904 | 41.1 |
| 100 | 51.0 | 3.0 | 0.1 | 0.106 | 56.8 |

Die Tabelle 2 zeigt die Auswirkung einer Änderung der Vorspannung Uv auf das Dreifache ihres für Dauerbetrieb bestimmten Wertes gemäß dem Ausführungsbeispiel der Figur 1. Auch hier stellt sich eine deutliche Steigerung des Pumpstroms ein.

Die Zeitdauer, für die der erhöhte Pumpstrom fließen soll, hängt von den Gegebenheiten der verwendeten Abgassonde ab.

Einerseits sollte das Zeitintegral des Pumpstroms proportional zum Referenzgasvolumen sein, da das Integral ein Maß für die gepumpte Sauerstoffmenge ist, die zur Spülung eines größeren Referenzgasvolumens größer sein muß als zur Spülung eines vergleichsweise kleineren Referenzgasvolumens.

Andererseits darf dieses Integral, das sich im einfachsten Fall als Produkt aus einer konstanten erhöhten Pumpspannung und der Zeit ergibt, nicht zu einer merklichen Zersetzung des Elektrolyten führen. Die entsprechenden Werte können durch Versuche mit der jeweils interessierenden Abgassonde bestimmt werden.

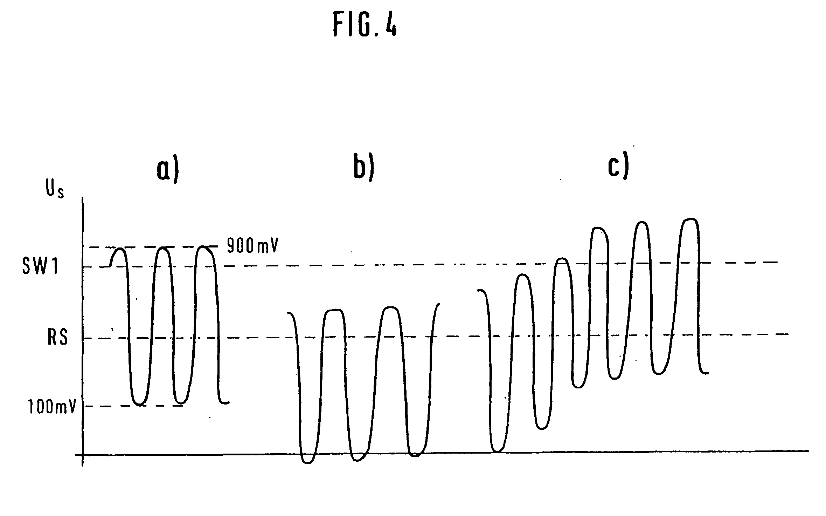

Das Ende der Pumpstromerhöhung kann auch durch eine Erholung des Sondensignals Us ausgelöst werden, dessen zeitlicher Ablauf nach einem Ausführungsbeispiel des erfindungsgemäßen Verfahrens in der Fig. 4 dargestellt ist.

Die Fig. 4 a zeigt das Sondensignal Us=Un+Ip*Ri, wie es im Fall einer unverfälschten Referenz zwischen ca. 100 mV und 900 mV oszilliert. Dabei beträgt der Spannungsversatz Ip*Ri ca 1mV, wie sich aus der Tabelle 1 (Ri=100 Ohm, Ip ca. 10 mikroA als Mittelwert von 2 und 17,6 mikroA) ergibt.

Fig. 4 b stellt den Signalverlauf von Us im Fall der verfälschten Referenzatmosphäre dar. Das Absinken der Nernstspannung Un führt dazu, daß ein Schwellwert SW1, der höher als die Regelschwelle RS und niedriger als die regelmäßig bei unverfälschter Referenz erreichte Sondenspannung von 900 mV ist, nicht mehr regelmäßig durchlaufen wird. Durch eine entsprechende Abfrage im Steuergerät 15 ausgelöst, wird daraufhin der Pumpstrom Ip erhöht.

Eine Erhöhung um den Faktor 10 führt zu einem Spannungsversatz Ri*Ip von ca. 10 mV. Der direkte Einfluß der Pumpstromerhöhung auf die gemessene Sondenspannung Us ist daher vergleichsweise klein.

Der indirekte Einfluß der Pumpstromerhöhung äußert sich in der Erholung der Nernstspannung Un, was zu dem in Fig. 4 c dargestellten deutlichen Anstieg der Sondensapnnung Us auf einen Wert führt, wie er für eine unverfälschte Referenzatmösphäre charakteristisch ist.

Damit verbunden, wird auch der Schwellwert SW1 wieder durchlaufen, was als Abschaltkriterium für den erhöhten Pumpstrom verwendet werden kann.

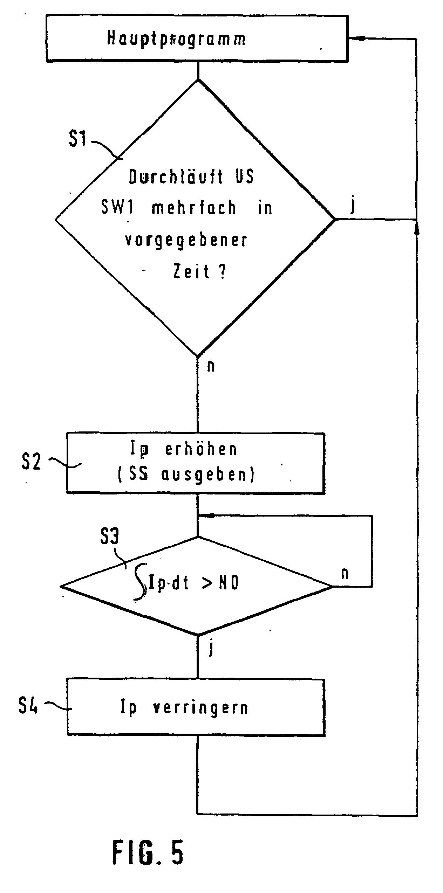

Figur 5 zeigt ein Flußdiagramm zur Durchführung des erfindungsgemäßen Verfahrens, ausgelöst durch eine Erkennung der verfälschten Referenzatmosphäre. Ausgehend von einem übergeordneten Hauptprogramm, das beispielsweise zur Berechnung von Einspritzimpulsen im Steuergerät 15 dient, wird in einem Schritt S1 geprüft, ob die Spannung US den Schwellwert S1 in einer vorgegebenen Zeit, beispielsweise in 10 Sekunden, einigemale durchläuft.

Bei unverfälschter Referenz wird diese Abfrage bejaht und ohne weitere Maßnahmen zum Hauptprogramm zurückgekehrt. Eine Verneinung führt dagegen zur Ausgabe des Signals SS zur Erhöhung der Pumpspannung bzw. des Pumpstroms in dem Schritt S2. Im Schritt S3 (wird S3) wird das Zeitintegral des Pumpstroms mit einem vorbestimmten Schwellwert N0 verglichen.

Ein Überschreiten dieses Schwellwertes löst ein Verringern des Pumpstroms bzw. der Pumpspannung im Schritt S4 und eine Rückkehr zum Hauptprogramm aus.

Alternativ zum Schritt S1 kann geprüft werden, ob die Sondenspannung in bestimmten Betriebszuständen, bspw. im Schiebebetrieb, negative Werte annimmt. Ist das der Fall, wird der Pumpstrom solange erhöht, bis das Sondensignal auch im Schiebebetrieb positive Werte annimmt und/oder außerhalb des Schiebebetriebs den Schwellwert SW1 wieder durchläuft.

### Patentansprüche

1.  Verfahren zum Betreiben einer Abgassonde (1) mit einem

    -   sauerstoffionenleitenden Festelektrolyten (2), der wenigstens
    -   eine einem Messgas ausgesetzte Messelektrode (3) und
    -   eine einem Referenzgas ausgesetzte Referenzelektrode (4) besitzt, wobei das Referenzgas eine interne Referenz in dem Sinne bildet, dass es vom Messgas und von der Umgebung so abgeschlossen ist, dass ein Teilchenaustausch zwischen Referenzgasatmosphäre und Messgas und/oder Umgebung wenigstens erschwert ist,
    -   und wobei an die Mess- und Referenzelektrode (3, 4) eine Spannung gelegt wird, deren Betrag und Richtung so vorbestimmt sind, dass zwischen Mess- und Referenzelektrode (3, 4) ein Pumpstrom (Ip) fließt, der Sauerstoffionen von der Messelektrode (3) zur Referenzelektrode (4) transportiert, ohne dass es unter Einwirkung der dauernd anliegenden Spannung zu einer Zersetzung des Elektrolyten (2) kommt,
    -   **dadurch gekennzeichnet, dass** der Pumpstrom (Ip) erhöht wird,
    -   dass das Zeitintegral des Pumpstroms (Ip) mit einem vorgegebenen Schwellenwert (NO) verglichen wird und
    -   dass bei einem Überschreiten des Schwellenwerts (NO) eine Verringerung des Pumpstroms (Ip) vorgenommen wird
    -   wobei der Schwellenwert (NO) auf einen Wert festgelegt ist, bei dessen Überschreiten eine Zersetzung des Elektrolyten (2) auftritt.

2.  Verfahren nach Anspruch 1, **dadurch gekennzeichnet, dass** die Erhöhung des Pumpstroms (Ip) nach jedem Start einer Brennkraftmaschine oder nach Ablauf vorgegebener Betriebsdauern der Brennkraftmaschine und/oder in bestimmten Betriebszuständen der Brennkraftmaschine ausgelöst wird.

3.  Verfahren nach Anspruch 1, **dadurch gekennzeichnet, dass** die Erhöhung des Pumpstroms (Ip) ausgelöst wird, wenn ein Absinken der Ausgangsspannung (Us) der Abgassonde (1) eine verfälschte Referenzatmosphäre anzeigt.

4. Verfahren nach Anspruch 3, **dadurch gekennzeichnet, dass** die Erhöhung des Pumpstroms (Ip) dann ausgelöst wird, wenn die Ausgangsspannung der Abgassonde (1) einen vorgegebenen Schwellenwert (SW1) innerhalb einer vorgegebenen Zeitspanne nicht wenigstens einmal durchläuft.

5. Verfahren nach wenigstens einem der vorhergehenden Ansprüche, **dadurch gekennzeichnet, dass** das Zeitintegral des Pumpstromes (Ip) auf die Größe des Referenzgasvolumens abgestimmt ist.

**Claims**

1. Method for operating an exhaust gas probe (1) having

   - an oxygen ion conducting solid electrolyte (2) which has at least
   - a measurement electrode (3) exposed to a test gas and
   - a reference electrode (4) exposed to a reference gas, the reference gas forming an internal reference in the sense that it is sealed off from the test gas and from the surroundings such that an exchange of particles between the reference gas atmosphere and test gas and/or surrounding is at least impeded,
   - there being applied to the measurement and reference electrodes (3, 4) a voltage whose magnitude and direction are predetermined such that there flows between the measurement and reference electrodes (3, 4) a pumping current (Ip) which transports oxygen ions from the measurement electrode (3) to the reference electrode (4) without the action of the permanently applied voltage leading to decomposition of the electrolyte (2),
   - **characterized in that** the pumping current (Ip) is increased,
   - that the time integral of the pumping current (Ip) is compared with a prescribed threshold value (NO), and
   - **in that** a reduction of the pumping current (Ip) is undertaken in the event of overshooting of the threshold value (NO),
   - the threshold value (NO) being fixed at a value upon overshooting of which decomposition of the electrolyte (2) occurs.

2. Method according to Claim 1, **characterized in that** the increase in the pumping current (Ip) is triggered after each start of an internal combustion engine or after expiry of a prescribed operating period of the internal combustion engine and/or in specific operating states of the internal combustion engine.

3. Method according to Claim 1, **characterized in that** the increase in the pumping current (Ip) is triggered when a lowering of the output voltage (Us) of the exhaust gas probe (1) indicates a falsified reference atmosphere.

4. Method according to Claim 3, **characterized in that** the increase in the pumping current (Ip) is triggered whenever the output voltage of the exhaust gas probe (1) does not cross at least once a prescribed threshold value (SW1) within a prescribed time interval.

5. Method according to at least one of the preceding claims, **characterized in that** the time integral of the pumping current (Ip) is coordinated with the magnitude of the reference gas volume.

**Revendications**

1. Procédé pour faire fonctionner un capteur de gaz d'échappement (1) comportant :

   - d'un électrolyte fixe (2) conduisant les ions oxygène avec au moins
   - une électrode de mesure (3) contenant un gaz de mesure et
   - une électrode de référence (4) contenant un gaz de référence, le gaz de référence constituant une référence interne en ce sens qu'il est renfermé par le gaz de mesure et par l'environnement de telle sorte qu'un échange de particules entre l'atmosphère de gaz de référence et le gaz de mesure et/ou l'environnement est au moins rendu plus difficile et
   - une tension s'appliquant alors sur l'électrode de mesure et l'électrode de référence (3, 4), tension dont l'intensité et la direction sont préalablement définies de telle sorte qu'un courant de pompe (Ip) s'écoule entre l'électrode de mesure et l'électrode de référence (3, 4), ce courant de pompe transportant des ions oxygène allant de l'électrode de mesure (3) vers l'électrode de référence (4) sans que cela entraîne une décomposition de l'électrolyte (2) sous l'effet de la tension appliquée en permanence,

**caractérisé en ce que**

- le courant de pompe (Ip) est augmenté,
- l'intégrale de temps du courant de pompe (Ip) est comparée à une valeur seuil (NO) préalablement définie et
- si la valeur seuil (NO) est dépassée, une diminution du courant de pompe (Ip) est assurée,
- la valeur seuil (NO) étant alors paramétrée sur une valeur dont le dépassement entraîne une décomposition de l'électrolyte (2).

2. Procédé selon la revendication 1,
   **caractérisé en ce que**
   l'augmentation du courant de pompe (Ip) est déclenchée après chaque démarrage d'un moteur à combustion interne ou une fois que la durée de fonctionnement préalablement définie du moteur à combustion interne s'est écoulée et/ou dans des états de fonctionnement précis du moteur à combustion interne.

3. Procédé selon la revendication 1,
   **caractérisé en ce que**
   l'augmentation du courant de pompe (Ip) est déclenchée si une diminution de la tension de sortie ($U_s$) de la sonde de gaz d'échappement (1) indique une atmosphère de référence altérée.

4. Procédé selon la revendication 3,
   **caractérisé en ce que**
   l'augmentation du courant de pompe (Ip) est alors déclenchée si la tension de sortie de la sonde de gaz d'échappement (1) ne traverse pas au moins une fois une valeur seuil (SW1) préalablement définie dans un intervalle de temps prédéterminé.

5. Procédé selon au moins l'une quelconque des revendications précédentes,
   **caractérisé en ce que**
   l'intégrale de temps du courant de pompe (Ip) est paramétrée sur la valeur du volume de gaz de référence.

EP 0 646 789 B1

Abgas          Umgebung

FIG. 1

FIG. 2

8

FIG. 2a

FIG. 3

# FIG. 4

EP 0 646 789 B1

Hauptprogramm

S1 — Durchläuft US SW1 mehrfach in vorgegebener Zeit ?

j

n

S2 — Ip erhöhen (SS ausgeben)

S3 — $\int Ip \cdot dt > N0$

n

j

S4 — Ip verringern

# FIG. 5